Europäisches Patentamt

European Patent Office

Office européen des brevets

(11) Publication number: **0 397 881**
**A1**

# EUROPEAN PATENT APPLICATION
## published in accordance with Art. 158(3) EPC

(21) Application number: 89911874.9

(22) Date of filing: 27.10.89

(86) International application number:
PCT/JP89/01106

(87) International publication number:
WO 90/05164 (17.05.90 90/11)

(51) Int. Cl.5: **C08L 23/10, C08L 67/00,**
**C08K 7/02**

(30) Priority: 02.11.88 JP 277811/88

(43) Date of publication of application:
22.11.90 Bulletin 90/47

(84) Designated Contracting States:
**DE GB**

(71) Applicant: **MITSUBISHI CORPORATION**
**6-3, Marunouchi 2-chome**
**Chiyoda-ku Tokyo 100(JP)**

Applicant: **MIKUNI SEISAKUSHO CO., LTD.**
**66, Inadaira 2-chome Musashimurayama-shi**
**Tokyo 190-12(JP)**

(72) Inventor: **NAKAI, Masazi 105,**
**Ichiban-cho-Higashi-Danchi 37**
**6-8-1, Ichiban-cho Tachikawa-shi**
**Tokyo 190(JP)**

(74) Representative: **Dealtry, Brian et al**
**Eric Potter & Clarkson St. Mary's Court St.**
**Mary's Gate**
**Nottingham NG1 1LE(GB)**

(54) **PROCESS FOR PRODUCING COMPOSITE MATERIAL COMPOSITION.**

(57) A process for producing a composite material composition having excellent physical properties at both high and low temperatures, characterized by melt-mixing 100 parts by weight of a polypropylene resin with 10 to 100 parts by weight of polyester fibers of 1 to 10 deniers in diameter of fiber, 0.5 to 50 mm in length, and 5 to 13 g/d in fiber strength at a temperature of up to 200°C.

DESCRIPTION

PROCESS FOR PRODUCING COMPOSITE COMPOSITIONS

TECHNICAL FIELD

This invention relates to a composite composition comprising a polypropylene resin. More specifically, it relates to a process for producing a composite composition which is excellent in various properties at high temperature and particularly in impact strength at low temperature.

BACKGROUND ART

In general, polypropylene resins have excellent processability but are inferior to metal materials in strength, rigidity, heat-resistance, dimension stability and flame resistance. In order to improve the properties lacking in polypropylene resins, it has been proposed to incorporate into the resins an inorganic filler such as talc, calcium carbonate, mica or the like, or a fibrous material such as glass fiber to enhance the properties.

Among the above-mentioned prior art, techniques incorporation of an inorganic filler into a polypropylene resin is advantageous in that it improves the rigidity and heat resistance of the resin, but has defects in that it often deteriorates the strength, increases the specific gravity and markedly impairs the impact strength.

On the other hand, composite-reinforcing fiber materials such as glass fibers can exhibit excellent properties in enhancing strength. When the fiber-containing material is molded, e.g., injection-molded into a desired article, however, it is known that the incorporated fibers are apt to be cut, with large shear stress caused by an extruder, into about 0.2 mm in fiber length after molding. It is theoretically necessary that the incorporated fibers retain some fiber length to enhance a certain strength, and thus conventional techniques have failed to obtain a satisfactory reinforcing effect with glass fiber. As to the properties over a broad temperature ranges, the materials containing inorganic fillers such as glass fibers generally serve to enhance the properties in the high temperature range, but are apt to markedly decrease the properties (particularly impact strength) in the low temperature range (e.g., 0°C to -40°C). It has also been attempted to incorporate a synthetic rubber material such as ethylene-propylene rubber to improve the impact strength in a low temperature range. The incorporation of such a rubber component, however, generally decreases the thermal resistance of the composite material.

Thus, there has not been available a composite material wherein the physical properties thereof in a wide temperature range covering both high temperature and low temperature ranges are enhanced at the same time.

## DISCLOSURE OF INVENTION

The present invention has been accomplished in consideration of the above-mentioned problems in the prior art, and a main object of the invention is to provide a process for producing a composite composition which has excellent properties in both a high temperature range and a low temperature range, and has a particularly excellent impact strength at temperatures as low as -30°C.

In order to achieve the above-mentioned object, the process for producing a composite composition according to the invention comprises melt-mixing, at a temperature not higher than 200°C, (a) 100 parts by weight of a polypropylene resin and (b) 10 to 100 parts by weight of polyester fibers having a fiber diameter of 1 to 10 deniers, a fiber length of 0.5 to 50 mm and a fiber strength of 5 to 13 g/d, and then molding the resulting mixture.

## BRIEF DESCRIPTION OF DRAWINGS

Fig. 1 is a cross-sectional view of the fiber having a core-sheath structue usable in the process of the present invention.

## BEST MODE FOR CARRYING OUT THE INVENTION

The present invention fundamentally relates to a composite composition comprising a combination of a polypropylene resin as a matrix and a polyester fiber as a filler.

As the polypropylene resin for the matrix material can be suitably used polypropylene, an ethylene-propylene copolymer, or maleic acid derivatives thereof. The polypropylene resin can be one of such resins, or a selective mixture of a plurality of such resins as necessary. Although polypropylene resins are generally excellent in their heat resistance and mechanical properties, a polypropylene having a high crystallinity can be preferably used in order to further increase these properties. Such high-crystalline polypropylene (HCPP) is exemplified by HCPP supplied by Chisso Sekiyu Kagaku K.K., Japan.

As the polyester fibers to be incorporated into the above-mentioned matrix can be preferably used polyethylene terephthalate fibers obtained by polycondensation of ethylene glycol and terephthalic acid or composite fibers composed of the above-mentioned fibers and other polyolefin fibers. As the composite fibers can be preferably used conjugated fibers having a core-sheath structure as shown in Fig. 1, wherein a core portion 1 consists of polyethylene, polypropylene or a polymer having carboxylic acid groups added to one of these polymers and a sheath portion 2 consists of a polyester fiber. In this case, it is preferable, in order to improve the impact properties at low temperatures, that the polymer forming the core portion 1 has a melt viscosity higher than that of the polypropylene resin used as a matrix of the composite material and has excellent melt adhesion to the polypropylene resin. Usually, incorporation of a coupling agent may be thought of to increase the adhesion between the resin matrix and the fiber filler. However, convensional coupling agents are not always useful for adhesion of the polypropylene resin and the polyester fiber contained in the composite composition according to the invention, and in particular enhancement of impact properties at low temperatures cannot be expected. According to the present inventors' research, the above-mentioned conjugated fiber having a core-sheath structure is excellent in melt adhesion to the polypropylene resin matrix and is therefore preferable for enhancing the physical properties of the composite composition.

As to the properties of the polyester fibers used in the invention, the fiber is in the range of desirably 1 to 10 deniers in fiber diameter; 0.5 to 50 mm, preferably 3 to 10 mm in fiber length; and 5 to 13 g/d, more preferably 9 to 13 g/d in fiber strength.

When the fiber length of the polyester fiber is smaller than 0.5 mm, the impact strength at a low temperature region is not satisfactorily improved. On the other hand, when the fiber is longer than 50 mm, the flowability thereof is deteriorated, uniform dispersion of the fiber becomes difficult during preparing a composite material, and also moldability of the resulting composite material is decreased. Thus, a fiber having a length outside the range is not desirable. Moreover, a fiber having a fiber strength of lower than 5 g/d has little effect in improving the impact strength at low temperatures. Polyester fiber having a fiber strength of higher than 13 g/d has not yet been available.

According to the present invention, the polyester fiber is added in an amount of 10 to 100 parts by weight, preferably 25 to 100 parts by weight, to 100 parts by weight of the polypropylene resin used as the matrix. Addition of the polyester fiber in an amount of less than 10 parts by weight is not desirable, because it does not satisfactorily improve the impact strength at low temperatures. On the other hand, the addition of the polyester fiber in an amount of more than 100 parts by weight is not desirable, because it deteriorates the flowability, makes uniform dispersion thereof difficult during preparing a composite material, and also decreases the moldability of the resulting composite material.

In the composite composition according to the invention, other additives can be additionally incorporated in addition to the above-mentioned essential components, as necessary. The example, synthetic rubbers such as ethylene propylene rubber or other thermoplastic resins can be added to further enhance the properties (e.g., impact strength) required for the objective molded article. Also, in order to increase the bending modulus of an aimed molded article, inorganic fillers such as talc can be added. These additional additives are incorporated preferably in an amount of 5 to 50 parts by weight to 100 parts by weight of the polypropylene resin.

In the following specifically explained is the process for producing a composite composition by using the above-mentioned component materials.

At first, the above-mentioned polyester fiber, polypropylene resin and other additives (hereinafter, referred to as raw materials) are formulated in a predetermined ratio, and then placed and mixed under kneading in a mixing apparatus such as a Banbury mixer, roll mixer, kneader or the like. The specific gravity of the polyester fiber is approximately half of those of conventional fillers or reinforcing materials. Thus, an equi-weight of the polyester fiber incorporated corresponds to about double the volume of the equi-weight of conventional fillers. Moreover, since the polyester fibers are often in a bundled state, it is difficult to uniformly disperse the fibers in a mixing apparatus. Therefore, it is important in the present process to supply to the mixing apparatus the polyester fibers in the form of single fiber to increase dispersibility of the fiber. Particularly, non-uniform dispersion of the fiber adversely affects the impact strength of the resulting composite composition. Therefore, in the case where bundled polyester fibers are to be used as a raw material, such fibers are preferably split into single fibers in advance by means of a splitter such as a card machine. According to the present invention, waste materials such as waste polyester fibers disposed from fiber mills or the like can be used as the polyester fiber as long as they satisfy the above-mentioned conditions. Thus, the present invention is also advantageous in view of the reuse and recycling of resources.

In the melt-mixing of the raw materials, the temperature of the raw-materials gradually rises during mixing under heating or without heating, and the polypropylene resin matrix (melting point: about 163°C) begins to melt and melt-adheres to the surfaces of the fibers contained in the raw materials, whereby the fibers are uniformly dispersed in the molten resin. In the present invention, this step is referred to as "melt-mixing". It is important in the melt-mixing step according to the invention to maintain the temperature of the raw materials at not higher than 200°C and preferably not higher than 190°C, to increase the low-temperature impact strength of the resulting composition. According to the present inventors' findings, a melt-mixing temperature of higher than 200°C deteriorates the properties of the incorporated fibers for some reason, which leads to a significant decrease in the low-temperature impact strength of the resulting composite composition.

The molten mixture obtained by the melt-mixing is extruded by means of a conventional apparatus such as an extruder to mold it into a desired shape such as pellets or sheets. Also in this molding step according to the present invention, it is important to maintain the temperature of the raw materials (molten mixture) at not higher than 200°C, preferably 190°C. Namely, it should be noted that if the temperature of the raw materials rises to higher than 200°C, the polyester fibers contained in the raw materials are cut owing to the heat of the raw materials and the action of strong shear force caused by the extruder, whereby the aimed improvement in the low-temperature impact strength cannot be obtained. The composite composition of the invention can be molded into a desired shape by a conventional molding method such as injection molding, vacuum forming or stamping, as well as the above-mentioned extrusion molding. However, it is important to strictly control the molding temperature as described above, to enhance the low-temperature impact properties.

Incidentally, in the case where injection molding is employed, the problem of floated fibers caused by molding shrinkage will not be generated by maintaining the temperature of the mold at not lower than 70°C, because the surface layer of the molding materials is covered with a resin layer and also flexibility of the polyester fiber works favorably.

The following describes some examples of the present invention.

Example 1

Sixty (60) parts by weight of a polypropylene block copolymer having a melt flow rate of 50 were uniformly melt-mixed with 30 parts by weight of ordinary polyester fibers (.5 deniers, 7 g/d in strength, 3 mm in fiber length) produced by condensation of ethylene glycol with terephthalic acid and 10 parts by weight of fine particulate talc by means of a Henschel mixer at 190°C or lower. The resulting bulk mixture was ground into fine particles in a mill. The resulting fine particles were molded into test pieces by using a usual injection molding machine at an injection pressure of 1000 kg/cm$^2$ while controlling the resin temperature at 190°C. The physical properties of the resulting composite material were determined. The results thereof are shown in Table 1. As Reference Example 2, also shown in Table 1 are the physical properties of a composite material comprising 60 parts by weight of a polypropylene block copolymer having a melt flow rate of 50 and 30 parts by weight of glass fiber. It will be seen from the results of Working Example 1 and Reference Examples 1 and 2 that, by using the polyester fiber according to the present invention, that the physical properties of the polypropylene resin at high temperatures are improved as well as the low-temperature impact strength thereof is markedly improved.

Example 2

Sixty (60) parts by weight of a polypropylene block copolymer having a melt flow rate of 50 were uniformly melt-mixed with 30 parts by weight of ordinary polyester fibers (5 deniers, 7 g/d in strength, 6 mm in fiber length) produced by condensation of ethylene glycol with terephthalic acid and 10 parts by weight of fine particulate talc by means of a Henschel mixer at 190°C or lower. The resulting bulk mixture was ground into fine particles in a mill. The physical properties of the resulting fine particles were determined similarly as in Working Example 1, which are shown in Table 1.

Example 3

Sixty (60) parts by weight of a polypropylene block copolymer having a melt flow rate of 50 were mixed with 30 parts by weight of high-strength polyester fibers (5 deniers, 9 g/d in strength, 3 mm in fiber length) and 10 parts by weight of fine particulate talc. The physical properties of the resulting mixture were determined in a similar manner as in Working Example 1. The results thereof are shown in Table 2.

Example 4

Sixty (60) parts by weight of a polypropylene block copolymer having a melt flow rate of 50 was mixed with 30 parts by weight of high-strength polyester fibers (5 deniers, 9 g/d in strength, 6 mm in fiber length) and 10 parts by weight of fine particulate talc. The physical properties of the resulting mixture were determined similarly as in Working Example 1. The results thereof are shown in Table 2.

Example 5

Seventy five (75) parts of a high-crystalline polypropylene block copolymer having a melt flow rate of 18 (Chisso Sekiyu Kagaku K.K., Japan; HCPP5420), were mixed with 25 parts of high strength polyester fibers (5 deniers, 9 g/d in strength, 6 mm in fiber length). The resulting mixture was processed into a composite material and was determined with respect to physical properties similarly as in Working Example 1. The results thereof are shown in Table 2.

Example 6

Seventy (70) parts of a high-crystalline polypropylene block copolymer having a melt flow rate of 6 (Chisso Sekiyu Kagaku K.K., Japan; HCPP5206), were mixed with 30 parts of high strength polyester fibers (5 deniers, 9 g/d in strength, 9 mm in fiber length), and the resulting mixture was processed into a composite material similarly as in Working Example 1. The physical properties of the composite material were determined. The results thereof are shown in Table 2.

Example 7

Seventy five (75) parts of a high-crystalline polypropylene block copolymer having a melt flow rate of 18 (Chisso Sekiyu Kagaku K.K., Japan; HCPP5420), were mixed with 25 parts of high strength polyester fibers (5 deniers, 6 g/d in strength, 6 mm in fiber length), and the resulting mixture was processed into a composite material similarly as in Working Example 1. The physical properties of the composite material were determined. The results thereof are shown in Table 2.

EP 0 397 881 A1

## Table 1

| Items | | ASTM method | units | Reference Example 1 | Reference Example 2 | Working Example 1 | Working Example 2 |
|---|---|---|---|---|---|---|---|
| density | | D-792 | g/cm$^3$ | 0.90 | 1.14 | 1.08 | 1.08 |
| tensile strength | | D-638 | kg/cm$^2$ | 350 | 850 | 400 | 430 |
| elongation | | D-638 | % | 15 | 5 | 8.2 | 7.5 |
| bending modulus of elasticity | | D-790 | kg/cm$^2$ | 15000 | 55000 | 24400 | 24800 |
| Izod impact strength (notched) | 23°C | D-256 | kg/cm/cm | 3.3 | 8.0 | 14 | 20 |
| | -30°C | ditto | ditto | 2.0 or lower | 4.0 or lower | 12 | 17 |
| thermal deformation temperature | | D-648 | °C | 105 | 150 | 144 | 144 |
| hardneas | | D-785 | R scale | 97 | 110 | 95 | 95 |

Table 2

| Items | | ASTM method | units | Working Example 3 | Working Example 4 | Working Example 5 | Working Example 6 | Working Example7 |
|---|---|---|---|---|---|---|---|---|
| density | | D-792 | $g/cm^3$ | 1.08 | 1.08 | 1.00 | 1.00 | 0.98 |
| tensile strength | | D-638 | $kg/cm^2$ | 410 | 450 | 305 | 390 | 390 |
| elongation | | D-638 | % | 10 | 11 | 25 | 40 | 25 |
| bending modulus of elasticity | | D-790 | $kg/cm^2$ | 24000 | 24500 | 22500 | 23500 | 19500 |
| Izod impact strength (notched) | 23°C | D-256 | kg/cm/cm | 20.0 | 32.8 | 42 | 42 | 40 |
| | -30°C | ditto | ditto | 19.0 | 30.0 | 39 | 39 | 37 |
| thermal deformation temperature | | D-648 | °C | 146 | 144 | 147 | 147 | 135 |
| hardneas | | D-785 | R scale | 95 | 95 | 105 | 105 | 100 |

EP 0 397 881 A1

As is apparent from the results of the examples of the present invention, the composite compositions obtained according to the process of the invention have excellent physical propertie for both high temperatue and low temperature ranges, and have particularly enhanced low-temperature impact properties, because a polypropylene resin is combined with a specified polyester fiber and the melt-mixing and molding thereof are carried out at a temperature not higher than 200°C.

INDUSTRIAL APPLICABILITY

The composite composition obtained according to the process of the present invention are widely applicable to those materials for which excellent physical properties and mechanical properties are required for both in high temperature and low temperature ranges, particularly to the materials such as various building materials and automobile part materials to be used under severe natural conditions.

CLAIMS

1.    A process for producing a composite composition having excellent physical properties both in high temperature and low temperature ranges, which comprises melt-mixing, at a temperature of not higher than 200°C, (a) 100 parts by weight of a polypropylene resin and (b) 10 to 100 parts by weight of polyester fibers having a fiber diameter of 1 to 10 deniers, a fiber length of 0.5 to 50 mm and a fiber strength of 5 to 13 g/d, and then molding the resulting mixture.

2.    The process according to Claim 1, in which the composite composition has a particularly high impact strength at a low temperature.

3.    The process according to Claim 1, in which 5 to 50 parts by weight of an inorganic filler is further added to 100 parts by weight of the polypropylene resin.

4.    The process according to Claim 1, in which 5 to 50 parts by weight of an ethyleneprophylene rubber and/or an inorganic filler are/is further added to 100 parts by weight of the polyprophylene resin.

5.    The process according to Claim 1, in which the polyester fiber is a polyester-polyolefin conjugated fiber having a core (polyolefin) - sheath (polyester) structure.

6.    The process according to Claim 1, in which the polypropylene resin is a high-crystalline polypropylene resin.

# INTERNATIONAL SEARCH REPORT

International Application No  PCT/JP89/01106

## I. CLASSIFICATION OF SUBJECT MATTER (if several classification symbols apply, indicate all) 6

According to International Patent Classification (IPC) or to both National Classification and IPC

Int. Cl⁴    C08L23/10, C08L67/00, C08K7/02

## II. FIELDS SEARCHED

| Minimum Documentation Searched 7 | |
|---|---|
| Classification System | Classification Symbols |
| IPC | C08L23/00 - 23/36, C08L67/00 - 67/08, C08K7/00 - 7/02, C08K9/00 - 9/08, C08K13/00 - 13/08 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 50-67350 (Nippon Oil Co., Ltd.) 6 June 1975 (06. 06. 75) (Family : none) | 1 - 6 |
| Y | JP, A, 58-52335 (Tokuyama Soda Co., Ltd.) 28 March 1983 (28. 03. 83) (Family : none) | 1 - 6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 28, 1989 (28. 11. 89) | December 11, 1989 (11. 12. 89) |
| International Searching Authority | Signature of Authorized Officer |
| Japanese Patent Office | |

Form PCT/ISA/210 (second sheet) (January 1985)